# EUROPÄISCHE PATENTANMELDUNG

(11) **EP 0 853 282 A2**
(43) Veröffentlichungstag der Anmeldung: **15.07.1998**
(21) Anmeldenummer: 98100071.4
(22) Anmeldetag: 05.01.1998
(51) Int. Cl.: G06F 13/24

(54) **Schutzschaltung für programm-gesteuerte elektrische Einrichtung**

(30) Priorität: 08.01.1997 DE 19700397
(71) Anmelder: SGS-THOMSON MICROELECTRONICS GMBH, 85630 Grasbrunn (DE)
(72) Erfinder: Bonitz, Rainer, 83043 Bad Aibling (DE)
(74) Vertreter: Klunker . Schmitt-Nilson . Hirsch

(57) **Zusammenfassung**

Schutzschaltung zur Verhinderung von Programmunterbrechungen einer programmschrittaktweise gesteuerten elektrischen Einrichtung durch zu häufiges Auftreten von nicht-maskierbaren Interrupt-Signalen (NMI). Diese Schutzschaltung besitzt eine steuerbare Interrupt-Signal-Durchlaßschaltung (AND), die in Abhängigkeit von einem Ausgangssignal einer Steuersignalquelle in einen das nicht-maskierbare Interrupt-Signal durchlassenden oder sperrenden Zustand steuerbar ist. Die Steuersignalquelle umfaßt einen Taktzähler (TAKTZÄHLER) mit Überlaufrücksetzung, mit welchem beginnend bei einem vorbestimmten Anfangszählwert Programmschrittaktimpulse bis zum Erreichen eines vorbestimmbaren Überlaufzählwert zählbar sind. Außerdem umfaßt die Steuersignalquelle einen Interrupt-Signalzähler (NMI-ZÄHLER), dessen Zählwert durch jedes nicht-maskierbare Interrupt-Ereignis erhöhbar und durch jedes Erreichen des Überlaufzählwertes des Taktzähler (TAKTZÄHLER) verringerbar ist. Desweiteren umfaßt die Steuersignalquelle eine Bewertungslogikschaltung (EL) zur Bewertung der Zählstände der beiden Zähler und zur Abgabe eines die Interrupt-Signal-Durchlaßschaltung (AND) in ihren sperrenden Zustand bringenden Steuersignals, solange der Interrupt-Signalzähler (NMI-ZÄHLER) einen vorbestimmbaren Sperrauslösezählwert aufweist. Schließlich umfaßt die Steuersignalquelle ein Statussteuerregister (SCR), in dem das Bewertungsverhalten der Bewertungslogikschaltung (EL) bestimmende Bewertungsbestimmungssignale zur Vorbestimmung des Überlaufzählwertes und des Sperrauslösezählwertes sowie Statussignale zur Zustandsanzeige mindestens bezüglich der Schutzschaltung speicherbar sind.

## Beschreibung

Bei programmgesteuerten elektrischen Einrichtungen sind üblicherweise Interrupt-Routinen vorgesehen, mittels welchen beim Auftreten vorbestimmter Ereignisse Interrupt-Signale abgegeben werden, die dazu führen, daß das gerade ausgeführte Programm (Hauptprogramm) unterbrochen und mit der Ausführung eines anderen Programms (Unterprogramms) begonnen wird, nach dessen Durchführung die Rückkehr in das unterbrochene Hauptprogramm stattfindet. Es gibt maskierbare und nicht-maskierbare Interrupt-Signale. Nicht-maskierbare Interrupt-Signale haben die höchste Priorität und sind berechtigt, die Ausführung maskierbarer Interrupt-Routinen zu unterbrechen, um einen unmittelbaren Start der nicht-maskierbaren Interrupt-Routine durchzusetzen.

Aus JP 3-229 332 A in: Patent Abstracts of Japan, Section P, No. 1296, Vol. 16, Nr. 9, Seite 90, ist es bekannt, in einen Signalweg zwischen einer Schaltungskomponente, die ein nicht-maskierbares Interrupt-Signal liefert, und eine darauf reagierende CPU eine steuerbare Interrupt-Signal-Durchlaßschaltung anzuordnen, die in Abhängigkeit von einem Ausgangssignal einer Steuersignalquelle in einen das nicht-maskierbare Interrupt-Signal durchlassenden Zustand oder in einen das nicht-maskierbare Interrupt-Signal sperrenden Zustand steuerbar ist. Hierzu ist eine UND-Schaltung vorgesehen, deren einem Eingang das nicht-maskierbare Interrupt-Signal zugeführt wird und deren anderer Eingang mit einem Ausgang eines Flipflop verbunden ist, dem ein den Schaltzustand des Flipflop bestimmendes Steuersignal zuführbar ist. Je nach Schaltzustand des Flipflop wird somit das nicht-maskierbare Interrupt-Signal zur CPU durchgelassen oder nicht. Das diesen Durchlaß sperrende Steuersignal wird dem Flipflop während des Ladens eines Startprogramms zugeführt. Solange das Steuersignal auf Durchlaß für das nicht-maskierbare Interrupt-Signal steuert, gelangt das nicht-maskierbare Interrupt-Signal zur CPU.

Ein zu häufiges Auftreten von nicht-maskierbaren Interrupt-Signalen, beispielsweise auf Grund von Störungen auf der Leiterplatte, auf welcher sich eine Leitung für nicht-maskierbare Signale befindet, kann zu einem Fehlverhalten des programmgesteuerten Systems führen. Ist hauptsächlich die nicht-maskierbare Interrupt-Routine aktiv, bleibt möglicherweise zu wenig Rechenieistung für andere Aufgaben komplexer Systeme übrig.

Dieses Problem wird mit der vorliegenden Erfindung überwunden.

Zu diesem Zweck macht die Erfindung eine Schutzschaltung der in Anspruch 1 angegebenen Art verfügbar. Ausführungsformen dieser Schutzschaltung sind in den abhängigen Ansprüchen angegeben.

Die erfindungsgemäße Schutzschaltung gegen zu häufiges Auftreten von nicht-maskierbaren Interrupt-Signalen umfaßt eine steuerbare Interrupt-Signal-Durchlaßschaltung, die je nach Ansteuerung durch eine Steuersignalquelle ein eingehendes nicht-maskierbares Interrupt-Signal durchläßt oder sperrt. Die Steuersignalquelle umfaßt einen Taktzähler mit Überlaufrücksetzung, der Programmschrittaktimpulse bis zum Erreichen eines vorbestimmbaren Überlaufzählwertes zählt, einen Interrupt-Signal-Zähler, dessen Zählwert durch jedes Auftreten eines nicht-maskierbaren Interrupt-Signals erhöht und durch jedes Erreichen des Überlaufzählwertes des Taktzählers verringert wird, eine Bewertungslogikschaltung, welche die Zählstände der beiden Zähler bewertet und die Interrupt-Signal-Durchlaßschaltung sperrt, so lange sich der Interrupt-Signal-Zähler auf einem vorbestimmbaren Zählwert befindet, und ein Register, in dem das Bewertungsverhalten der Bewertungslogikschaltung bestimmende Signale und Statussignale zur Zustandsanzeige mindestens bezüglich der Schutzschaltung speicherbar sind.

Gemäß einer Ausführungsform der Erfindung wird ein programmierbarer Doppelstufenzähler verwendet. Treten nicht-maskierbare Interrupt-Signale mit zu hoher Häufigkeit auf, wird das nicht-maskierbare Interrupt-Signal gesperrt und ein Fehler-Flag gesetzt, welches durch die Anwendungssoftware bewertet werden kann.

Gemäß einer Ausführungsform der Erfindung weisen der Interrupt-Signal-Zähler und der Taktzähler zusammen eine Anzahl Zählerstufen auf, die der Datenbus-Bitzahl des Systems gleich ist. Beispielsweise im Fall eines Systems mit einem 8-Bit-Datenbus umfassen der Interrupt-Signal-Zähler und der Taktzähler zusammen 8 Zählerstufen. Bei der bevorzugten Ausführungsform teilen sich diese 8 Zählerstufen auf in 2 Zählerstufen für den Interrupt-Signal-Zähler und 6 Zählerstufen für den Taktzähler.

Mit der Bewertungslogikschaltung werden die jeweiligen Zählerstände von Taktzähler und Interrupt-Signal-Zähler bewertet. Die Bewertungslogikschaltung ist programmierbar mit Hilfe des Registers, in dem das Bewertungsverhalten der Bewertungslogikschaltung bestimmende Bewertungsbestimmungssignale speicherbar sind. Mit diesen ist beispielsweise programmierbar, bei welchem Zählwert der Taktzähler seinen Überlaufzählwert erreicht, bei welchem er einerseits einen neuen Zähllauf beginnt und bei welchem andererseits der momentan erreichte Zählwert des Interrupt-Signal-Zählers reduziert wird.

Im Register sind außerdem Statussignale speicherbar, mittels welchen Zustände mindestens innerhalb der Schutzschaltung anzeigbar sind, beispielsweise um einen steuernden Microprozessor über solche Zustände auf dem laufenden zu halten.

Das Register gibt somit die Möglichkeit, zwischen verschiedenen möglichen Zählercharakteristika zu wählen und Diagnoseinformation an einen Microcontroller oder Microprozessor zu schicken.

Die erfindungsgemäße Schutzschaltung kann z.B. als digitales Störfilter verwendet werden, beispielsweise um die Wirkung von elektromagnetischen Störimpulsen zu unterdrücken. Eine andere Anwendung sind Antiblockiersysteme für Fahrzeugbremsen. Ohne eine erfindungsgemäße Schutzschaltung könnte es bei zu häufigem Auftreten von nicht-maskierbaren Interrupt-Signalen pro Zeiteinheit zu einem dauerhaften Blockieren des Bremssystems kommen.

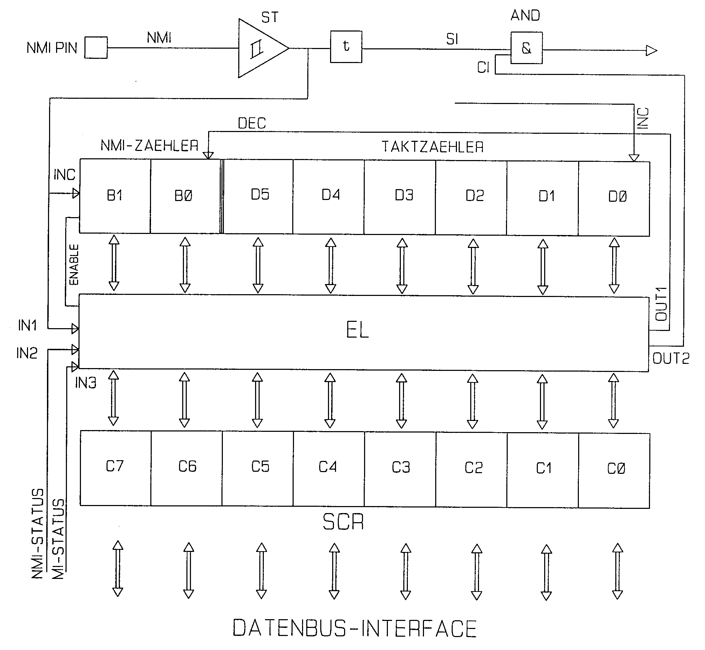

Die Erfindung wird nun anhand einer in der einzigen Zeichnung dargestellten Ausführungsform näher erläutert.

Bei der dargestellten Ausführungsform ist die Schutzschaltung monolithisch integriert und weist einen Anschlußstift NMI PIN auf, dem ein nicht-maskierbares Interrupt-Signal zuführbar ist. Dieses gelangt über einen Schmitt-Trigger ST und ein Verzögerungsglied t auf einen Steuereingang SI einer als steuerbare Interrupt-Signal-Durchlaßschaltung dienenden UND-Verknüpfungsschaltung AND. Über einen Steuersignaleingang CI ist die UND-Verknüpfüngsschaltung AND für das Interrupt-Signal durchlassend oder sperrend steuerbar. Somit ist über den Steuersignaleingang CI bestimmbar, ob das nicht-maskierbare Interrupt-Signal NMI am Ausgang von AND erscheint oder nicht.

Der Sperr- oder Durchlaßzustand von AND steht unter der Steuerung einer Steuersignalquelle, die einen als Interrupt-Signal-Zähler dienenden NMI-ZÄHLER mit zwei Zählerstufen B0, B1 und einen Programmschrittaktimpulse zählenden TAKTZÄHLER mit sechs Zählerstufen D0 bis D5 aufweist. Der TAKTZÄHLER erhält an seiner Zählerstufe D0 über einen Zählwerterhöhungseingang INC von einer (nicht dargestellten) CPU Programmschrittaktimpulse, welche vom TAKTZÄHLER aufwärts gezählt werden, bis ein vorbestimmbarer Überlaufzählwert des TAKTZÄHLERS erreicht ist.

Die Zählerstufen B0 und B1 des NMI-Zählers sind mit Abwärtszähleingang DEC bzw. mit einem Aufwärtszähleingang INC versehen.

Die in der Figur dargestellte Ausführungsform weist ein 8-Bit-Datenbussystem auf, weswegen der NMI-ZÄHLER und der TAKTZÄHLER zusammen 8 Zählerstufen aufweisen. Es ist auch eine beliebig andere Aufteilung der Zählerstufen auf die beiden Zähler möglich.

Den beiden Zählern ist eine Bewertungslogikschaltung EL parallel geschaltet, die ihrerseits in Parallelschaltung zu einem Statussteuerregister SCR steht. Das Statussteuerregister SCR weist bei der dargestellten Ausführungsform im Hinblick auf das 8-Bit-Datenbussystem ebenfalls 8 Registerstufen C0 bis C7 auf.

Zwischen der Bewertungslogik EL und den beiden Zählern einerseits und dem Statussteuerregister SCR andererseits besteht je eine 8-Bit-Verbindung. Die 8 Stufen des Statussteuerregisters SCR sind mit dem Systemdatenbus über eine 8-Bit-Datenbusschnittstelle DATENBUS INTERFACE verbunden. Die Bewertungslogik EL besitzt drei Eingänge IN1, IN2, IN3 und zwei Ausgänge OUT1, OUT2. IN1 wird das vom Schmitt-Trigger ST kommende nicht-maskierbare Interrupt-Signal NMI zugeführt. IN2 und IN3 erhalten von einem (nicht dargestellten) Microprozessor Statussignale NMI-STATUS bzw. MI-STATUS, welche Statusinformation bezüglich nicht-maskierbarer Interrupts bzw. maskierbarer Interrupts geben. Die Ausgänge OUT1 und OUT2 der Bewertungslogikschaltung EL sind mit dem Abwärtszähleingang DEC des NMI-ZÄHLERS bzw. mit dem Steuereingang CI der UND-Verknüpfüngsschaltung AND verbunden.

Zwischen der Bewertungslogikschaltung EL und der Zählerstufe B1 des NMI-ZÄHLERS besteht eine Leitungsverbindung für ein Freigabesignal ENABLE.

Es wird nun die Funktionsweise der in der Figur dargestellten Schutzschaltung erläutert.

Mit dem Schmitt-Trigger ST werden Störsignale bis zu einem bestimmten Ausmaß unterdrückt. Mittels des Verzögerungsgliedes t wird ein am Ausgang des Schmitt-Triggers ST auftretendes nicht-maskierbares Interrupt-Signal NMI um eine kurze Zeitspanne verzögert, bevor es auf den Signaleingang SI von AND gegeben wird, um der Schutzschaltung ausreichend Zeit für eine Statusanalyse und eine Reaktion auf das Eintreffen eines nicht-maskierbaren Interrupt-Signals NMI zu geben.

Der NMI-ZÄHLER erhöht seinen Zählstand jedes Mal, wenn ihm über den Aufwärtszähleingang INC ein nicht-maskierbares Interrupt-Signal NMI geliefert wird, und er verringert seinen Zählstand jedes Mal, wenn ihm über seinen Abwärtszähleingang DEC ein Abwärtszählimpuls von der Bewertungslogikschaltung EL geliefert wird. Der NMI-ZÄHLER weist keinen Überlauf auf. Daher kann er nicht durch Erreichen eines maximalen Zählwertes auf seinen Anfangszählwert 0 rückgesetzt werden sondern nur durch Abwärtszählen bis zum Anfangszählwert 0.

Der TAKTZÄHLER dagegen ist ein Überlaufzähler, der eine Aufwärtszählung der Programmschrittaktimpulse von der CPU durchführt und beim Erreichen eines wählbaren Überlaufzählwertes auf seinen Anfangszählwert 0 rückgesetzt wird. Sobald die Bewertungslogikschaltung EL feststellt, daß der TAKTZÄHLER seinen Überlaufwert erreicht hat, gibt sie über ihren Ausgang OUT1 und den Abwärtszähleingang DEC an den NMI-ZÄHLER einen Abwärtszählimpuls.

Wenn die Bewertungslogikschaltung EL feststellt, daß der NMI-ZÄHLER einen programmierbaren Sperrauslösezählwert erreicht hat, gibt sie über ihren Ausgang OUT 2 an den Steuereingang CI der UND-Verknüpfüngsschaltung AND ein Sperrsteuersignal, so daß AND in den Sperrzustand gesteuert wird und weitere nicht-maskierbare Interrupt-Signale NMI nicht mehr zum Ausgang von AND gelangen weitere nicht-maskierbare Interrupt-Ereignisse somit nicht mehr weitergemeldet werden. Die Sperre von AND wird erst aufgehoben, wenn der NMI-ZÄHLER wieder seinen Anfangszählwert 0 erreicht hat. Die Dauer der Interrupt-Signalsperre ist durch die Anzahl von Programmschrittaktimpulsen gegeben, die erforderlich ist, damit der NMI-ZÄHLER bis zu seinem Anfangszählwert 0 herabzählt. Während dieser Sperrzeitdauer können weitere nicht-maskierbare Interrupt-Signale ein erneutes Aufwärtszählen des NMI-ZÄHLERS nicht bewirken.

Über das Statussteuerregister SCR ist eine Programmierung hinsichtlich des Überlaufzählwertes des TAKTZÄHLERS und des Sperrauslösezählwertes des NMI-ZÄHLERS möglich. Über diese Programmierung ist somit bestimmbar, nach wievielen nicht-maskierbaren Interrupt-Ereignissen die Weitergabe weiterer nicht-maskierbarer Interrupt-Signale gesperrt werden soll und nach wievielen von der CPU gelieferten Programmschrittaktimpulsen diese Sperre wieder aufgehoben wird.

Im Statussteuerregister SCR werden sowohl Parameter zur Vorgabe der Bewertung von Zählständen des NMI-ZÄHLERS und des TAKTZÄHLERS durch die Bewertungslogikschaltung EL als auch Parameter zur Statusanzeige gespeichert. Dabei sind den einzelnen Registerstufen C0 bis C7 die in der folgenden Tabelle 1 angegebenen Funktionsparameter gespeichert.

**TABELLE 1**

| Statussteuerregister | |
|---|---|
| Bit Nr. | Funktion |
| C0 | ICSEL0 |
| C1 | ICSEL1 |
| C2 | NMISEL |
| C3 | LOCKSTATUS |
| C4 | MACT |
| C5 | CLEAR |
| C6 | ENABLE |
| C7 | NMI |

Die Funktionsparameter ICSEL0 und ICSEL1 in Tabelle 1 dienen der Wahl oder Vorbestimmung des Überlaufzählwertes des TAKTZÄHLERS. Die folgende Tabelle 2 zeigt die Zuordnung der Überlaufzählwerte zu den möglichen Binärwertkombinationen für ICSEL0 und ICSEL1.

**TABELLE 2**

| ICSEL0 | ICSEL1 | Überlauf |
|---|---|---|
| 0 | 0 | 4 |
| 0 | 1 | 16 |
| 1 | 0 | 32 |
| 1 | 1 | 64 |

Der Funktionsparameter NMISEL dient der Wahl oder Vorbestimmung des Sperrauslösezählwertes des NMI-ZÄHLERS. Den beiden möglichen Binärwerten von NMISEL sind Sperrauslösezählwerte gemäß der folgenden Tabelle 3 zugeordnet.

**TABELLE 3**

| NMISEL | SPERRAUSLÖSEZÄHLWERT |
|---|---|
| 0 | 2 |
| 1 | 3 |

Die in den Registerstufen C3 bis C7 gespeicherten Statusparameter haben folgende Bedeutung:

LOCKSTATUS ist auf den Binärwert "1" gesetzt, solange ein nicht-maskierbares Interrupt-Signal die UND-Verknüpfungsschaltung AND nicht passieren kann.

MACT ist auf "1" gesetzt, wenn das aktuelle nicht-maskierbare Interrupt-Ereignis während der Ausführung einer maskierbaren Interrupt-Routine auftritt. MACT wird am Ende der nicht-maskierbaren Interrupt-Routine rückgesetzt.

CLEAR bewirkt eine Rücksetzung der beiden Zähler, wenn CLEAR auf "1" gesetzt ist.

ENABLE setzt den Schutzmechanismus der Schutzschaltung in Funktion, wenn ENABLE auf "1" gesetzt ist, und schaltet den Steuereingang CI von AND permanent auf den Durchlaßfreigabebinärwert "1", wenn ENABLE auf "0" gesetzt ist.

NMI ist auf "1" gesetzt, wenn ein nicht-maskierbares Interrupt-Ereignis während des Sperrzustandes von AND auftritt, und wird gelöscht, sobald AND in den Freigabezustand gesteuert ist.

Der Statusparameter LOCKSTATUS wird verwendet, damit per Software aus dem Statusregister SCR abfragbar ist, ob sich die Schutzschaltung im Durchlaßzustand oder im Sperrzustand für das nicht-maskierbare Interrupt-Signal NMI befindet.

Über den Parameter ENABLE kann die Schutzfunktion der Schutzschaltung abgeschaltet werden, so daß jedes nicht-maskierbare Interrupt-Signal die UND-Verknüpfüngsschaltung AND passieren kann.

Die der Bewertungslogikschaltung EL über die Eingänge IN2 und IN3 zugeführten Statussignale NMI-STATUS und MI-STATUS befinden sich auf aktivierendem hohen Potential, wenn die nicht-maskierbare Interrupt-Routine bzw. eine maskierbare Interrupt-Routine aktiv ist. Über das DATENBUS-INTERFACE können Daten sowie Lese- und Schreibsignale mit dem Statussteuerregister SCR ausgetauscht werden. Mit Hilfe der Lesesignale kann aus dem Statussteuerregister SCR abgefragt werden, wie die Bewertungssteuerlogik EL programmiert ist. Über die Schreib-Signale kann das Statussteuerregister SCR programmiert werden.

Die erfindungsgemäße Schutzschaltung kann auch zum Entprellen verwendet werden.

Die Übereinstimmung zwischen der Gesamtanzahl von Zählerstufen der beiden Zähler mit der Bit-Zahl des Datenbussystems ist nicht zwingend, jedoch vorteilhaft. Die Aufteilung der gesamten Zählerstufenzahl der beiden Zähler auf zwei Stufen für den NMI-ZÄHLER und 6 Stufen für den TAKTZÄHLER ist nicht zwingend. Es sind auch beliebig andere Aufteilungen der gesamten Anzahl von Zählerstufen auf die beiden Zähler möglich, und zwar in Abhängigkeit von den Bedürfnissen der jeweiligen speziellen Ausführungsform der Schutzschaltung.

## Patentansprüche

1. Schutzschaltung zur Verhinderung von Programmunterbrechungen einer programmschrittaktweise gesteuerten elektrischen Einrichtung durch zu häufiges Auftreten von nicht-maskierbaren Interrupt-Signalen,
a) mit einer steuerbaren Interrupt-Signal-Durchlaßschaltung (AND), der ein von einer Interrupt-Signal-Quelle (NMI PIN) kommendes nicht-maskierbares Interrupt-Signal (NMI) zuführbar ist und die in Abhängigkeit von einem Ausgangssignal einer Steuersignalquelle in einen das nicht-maskierbare Interrupt-Signal (NMI) durchlassenden Zustand oder in einen das nicht-maskierbare Interrupt-Signal (NMI) sperrenden Zustand steuerbar ist;
b) wobei die Steuersignalquelle aufweist:
b1.) einen Taktzähler (TAKTZÄHLER) mit Überlaufrücksetzung, mit welchem beginnend bei einem vorbestimmten Anfangszählwert Programmschrittaktimpulse bis zum Erreichen eines vorbestimmten Überlaufzählwertes zählbar sind;
b.2) einen Interrupt-Signal-Zähler (NMI-ZÄHLER), dessen Zählwert durch jedes Auftreten eines nicht-maskierbaren Interrupt-Signals erhöhbar und durch jedes Erreichen des Überlaufzählwertes des Taktzählers (TAKTZÄHLER) verringerbar ist;
b.3) eine Bewertungslogikschaltung (EL) zur Bewertung der Zählstände der beiden Zähler (NMI-ZÄHLER, TAKTZÄHLER) und zur Abgabe eines die Interrupt-Signal-Durchlaßschaltung (AND) in ihren sperrenden Zustand bringenden Steuersignals, so lange der Interrupt-Zähler (NMI-ZÄHLER) einen vorbestimmbaren Sperrauslösezählwert aufweist;
b.4) und ein Statussteuerregister (SCR), in dem das Bewertungsverhalten der Bewertungslogikschaltung (EL) bestimmende Bewertungsbestimmungssignale zur Vorbestimmung des Überlaufzählwertes und des Sperrauslösezählwertes sowie Statussignale zur Zustandsanzeige mindestens bezüglich der Schutzschaltung speicherbar sind.

2. Schutzschaltung nach Anspruch 1,
die mit einem N-Bit-Datenbus koppelbar ist und bei welcher der Taktzähler (TAKTZÄHLER) und der Interrupt-Signalzähler (NMI-ZÄHLER) zusammen N Zählerstufen aufweisen und das Statussteuerregister (SCR) N Registerstufen aufweist.

3. Schutzschaltung nach Anspruch 1 oder 2,
bei welcher das von der Interrupt-Signalquelle (NMI PIN) gelieferte nicht-maskierbare Interrupt-Signal (NMI) der Steuersignalquelle direkt und der Interrupt-Signal-Durchlaßschaltung (AND) über eine Verzögerungsschaltung (t) zugeführt wird,
wobei die Verzögerungsschaltung (t) das ihr zugeführte nicht-maskierbare Interrupt-Signal (NMI) um eine Zeitdauer verzögert, die mindestens so groß ist wie die Zeitdauer, welche die Steuersignalquelle vom Erhalt des nicht-maskierbaren Interrupt-Signals bis zur Abgabe des Steuersignals benötigt.

4. Schutzschaltung nach einem der Ansprüche 1 bis 3,
bei welcher das nicht-maskierbare Interrupt-Signal (NMI) der Interrupt-Signal-Durchlaßschaltung (AND) und der Steuersignalquelle über einen Schmitt-Trigger (ST) zuführbar ist.

5. Schutzschaltung nach einem der Ansprüche 1 bis 4,
bei welcher die Interrupt-Signal-Durchlaßschaltung (AND) eine UND-Verknüpfungsschaltung mit einem Signaleingang (SI) und einem Steuereingang (CI) aufweist, wobei dem Signaleingang (SI) das nicht-maskierbare Interrupt-Signal (NMI) und dem Steuereingang (CI) das Steuersignal von der Steuersignalquelle zuführbar ist.
